(19) Europäisches Patentamt
European Patent Office
Office européen des brevets

(11) Veröffentlichungsnummer: **0 273 112 B1**

(12) # EUROPÄISCHE PATENTSCHRIFT

(45) Veröffentlichungstag der Patentschrift: **21.03.90**

(51) Int. Cl.⁴: **C08F 114/06**, C08F 2/20, H01M 2/16

(21) Anmeldenummer: **87114309.5**

(22) Anmeldetag: **01.10.87**

(54) **Verfahren zur Herstellung einer sinterfähigen feinteiligen Formmasse auf Basis von Polyvinylchlorid und deren Verwendung.**

(30) Priorität: **06.12.86 DE 3641815**

(43) Veröffentlichungstag der Anmeldung: **06.07.88 Patentblatt 88/27**

(45) Bekanntmachung des Hinweises auf die Patenterteilung: **21.03.90 Patentblatt 90/12**

(84) Benannte Vertragsstaaten: **AT BE CH DE FR GB IT LI NL SE**

(56) Entgegenhaltungen: **EP-A- 0 137 360**

(73) Patentinhaber: **HÜLS AKTIENGESELLSCHAFT, Patentabteilung / PB 15 - Postfach 13 20, D-4370 Marl 1(DE)**

(72) Erfinder: **Bieringer, Helmo, Dr., Lohened 20, A-4880 St. Georgen(AT)**
Erfinder: **Engel, Klaus, Dr., Langestrasse 28, D-4100 Duisburg 14(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 273 112 B1

## Beschreibung

Die Erfindung betrifft ein Verfahren zur Herstellung einer sinterfähigen feinteiligen Formmasse durch Homopolymerisation von Vinylchlorid in wäßriger Suspension, wobei neben einem Suspensionsmittel ein Co-Suspensionsmittel aus der Klasse der sulfatierten Kohlenhydratester verwendet wird, und deren Verwendung zur Herstellung von Separatorplatten für elektrische Zellen.

Es ist bekannt, Formmassen auf der Basis von Polyvinylchorid zur Herstellung von gesinterten Formkörpern, beispielsweise von Separatorplatten für elektrische Zellen, einzusetzen.

In der DE-C3-23 10 431 ist ein Verfahren beschrieben, bei dem man zur Herstellung des Suspensionspolymeren außer den üblichen Suspensionsstabilisatoren und nichtionogenen Netzmitteln eine freie Emulgatorsäure einsetzt. Aus solchen Polymeren lassen sich zwar Sinterplatten mit guter Benetzbarkeit und guten mechanischen Eigenschaften herstellen, aber deren elektrischer Widerstand ist vergleichsweise hoch.

In der DE-A-33 34 667 wird ein Verfahren beschrieben, bei dem nach der Vinylchloridpolymerisation, vor der Trocknung des feinteiligen Polymeren, mindestens ein nichtionogenes Netzmittel und eine nicht oberflächenaktive Säure zugesetzt werden. Auch mit derartigen Polymeren gelingt es nicht, Sinterplatten herzustellen, die bei guten mechanischen Eigenschaften einen kleinen elektrischen Widerstand haben.

Im Zuge der Optimierung der Gebrauchseigenschaften von elektrischen Zellen, insbesondere von Batterien für die Anwendung in Kraftfahrzeugen, hat man festgestellt, daß die Kaltstartleistung einer Batterie durch einen verringerten elektrischen Widerstand erheblich verbessert werden kann. Es ist also wünschenswert, Sinterplatten herzustellen, die einen möglichst geringen elektrischen Widerstand zeigen. Es sind auch Sinterplatten erwünscht, die bei gegebener Plattendicke und Festigkeit eine hohe Porosität aufweisen. Eine hohe Porosität der Sin terplatte bedeutet nämlich ein höheres Säurespeichervolumen und ermöglicht eine Reduktion des Batterievolumens.

Es wurde nun festgestellt, daß sich Sinterplatten mit geringem elektrischen Widerstand und hoher Porosität herstellen lassen, indem man zur Sinterung ein feinteiliges Polyvinylchlorid einsetzt, welches hergestellt wird durch Suspensionspolymerisation von Vinylchlorid bei 40 bis 80 °C in Gegenwart von mindestens einem öllöslichen, radikalisch zerfallenden Aktivator, gegebenenfalls Molekülgrößenreglern sowie Celluloseethern als Suspensionsstabilisatoren, das dadurch gekennzeichnet ist, daß man 0,5 bis 1 Gewichtsprozent, bezogen auf das Monomere, eines Suspendiermittelgemisches verwendet, welches besteht aus

a) 10 bis 90 Gewichtsprozent, bezogen auf das Gemisch, eines Kohlenhydratesters, bestehend aus einem Kohlenhydrat folgender Formel:

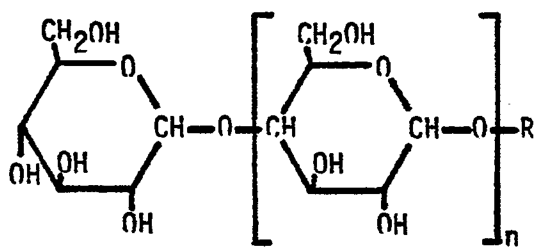

in der n eine Zahl von 0 bis 99 und R den Rest eines 2- bis 6wertigen aliphatischen linearen oder verzweigten Alkohols mit 2 bis 12 Kohlenstoffatomen bedeutet, und einer gesättigten oder ungesättigten, linearen oder verzweigten Carbonsäure mit 6 bis 24 Kohlenstoffatomen, welcher zu 10 bis 95 % sulfatiert wurde, sowie aus

b) 90 bis 10 Gewichtsprozent Methylcellulose, Methylhydroxyethylcellulose, Methylhydroxypropylcellulose, Hydroxyethylcellulose oder Hydroxypropylcellulose, wobei die 2gewichtsprozentige wäßrige Lösung der genannten Celluloseether bei 20 °C eine Viskosität von 15 bis 500 • $10^{-3}$ Pa s ausweist.

In einer günstigen Ausführungsform des Verfahrens besteht die Komponente b) aus 90 bis 10 Gewichtsprozent Methylcellulose, Methylhydroxyethylcellulose oder Methylhydroxypropylcellulose mit einem molekularen Substitutionsgrad der Methoxygruppe von 1,4 bis 2,4 und einem molaren Substitutionsgrad der gegebenenfalls vorhandenen Hydroxyalkoxygruppe von 0,08 bis 0,28; oder Hydroxyethylcellulose oder Hydroxypropylcellulose mit einem molaren Substitutionsgrad von 1 bis 3,5, wobei die 2gewichtsprozentige wäßrige Lösung der genannten Celluloseether bei 20 °C eine Viskosität von 15 bis 500 • $10^{-3}$ Pa s ausweist.

Vorzugsweise wird die Komponente a) in Mengen von 20 bis 80 Gewichtsprozent, bezogen auf das Suspendiermittelgemisch, eingesetzt. Eine besonders günstige Eigenschaftskombination des

Polyvinylchloridharzes wird mit Suspensionsmittelgemischen erhalten, die als Komponente b) eine Methylhydroxypropylcellulose mit einer Viskosität von 50 bis 100 mPa s enthalten und die 20 bis 80 und insbesondere 70 bis 30 Gewichtsprozent der Komponente b) enthalten.

In bevorzugter Ausführungsform des Verfahrens beträgt der Sulfatierungsgrad des Kohlenhydratesters 20 bis 90 %.

Der Veresterungsgrad des Kohlenhydratesters beträgt zweckmäßigerweise 10 bis 95 %, insbesondere 20 bis 90 %.

Der als Komponente a) einzusetzende sulfatierte Kohlenhydratester kann durch Sulfatierung eines nach der DE-OS 24 23 278 hergestellten Kohlenhydratesters gewonnen werden. Eine allgemeine Beschreibung der Sulfatierung findet man bei E. E. Gilbert, Sulfonation and related Reactions, Seite 336, Intersience Publishers, New York - London - Sydney, (1965).

Das dem Kohlenhydratester zugrundeliegende Kohlenhydrat ist aus Aglykon und Kohlenhydrat-Rest aufgebaut. Der Kohlenhydrat-Rest enthält 1 bis 100, vorzugsweise 1 bis 50, insbesondere 1 bis 15 Anhydroglycoseeinheiten, die alpha- und/oder beta-glycosidisch miteinander verknüpft sein können. Der Kohlenhydrat-Rest kann eine einheitliche molekulare Struktur haben, vorzugsweise ist er jedoch ein Gemisch von Kohlenhydrat mit unterschiedlicher Zahl von Anhydroglycoseeinheiten.

Das Aglykon R-OH kann ein 2- bis 6wertiger aliphatischer linearer oder verzweigter Alkohol mit 2 bis 12 Kohlenstoffatomen sein. Es kommen beispielsweise infrage:

Ethylenglykol, 1,2-Propylenglykol, 1,3-Propylenglykol, 1,2-Butylenglykol, 1,4-Butandiol, 1,6-Hexandiol, Glycerin, Trimethylpropan, Erythrit, Pentaerythrit, Pentite, wie z. B. Arabit und Xylit, Hexite, wie z. B. Sorbit, Mannit und Dulcit.

Das aus Aglykon und Anhydroglycoseeinheiten zusammengesetzte Kohlenhydrat kann mit gesättigten oder ungesättigten, linearen oder verzweigten aliphatischen Carbonsäuren bzw. Carbonsäuregemischen, welche 6 bis 24 Kohlenstoffatome enthalten, verestert werden.

Als solche Carbonsäuren lassen sich beispielsweise einsetzen:

Capronsäure, Caprylsäure, Caprinsäure, Laurinsäure, Myristinsäure, Palmitinsäure, Stearinsäure, Arachinsäure, Behensäure, Lignocerinsäure, Palmitoleinsäure, Ölsäure, Elaidinsäure, Linolsäure, Linolensäure, Rizinolsäure oder deren natürlichen Triglyceriden entsprechende Mischungen, wie z. B. Rübölfettsäure, Tallölfettsäure, Kokosfettsäure, Sojaölfettsäure, Rizinusölfettsäure, Palmkernölfettsäure, Palmölfettsäure, Erdnußölfettsäure, Baumwollsaatölfettsäure, Sonnenblumenölfettsäure, Leinölfettsäure, Talgfettsäure und Fischölfettsäure.

Die molare Menge der im Kohlenhydratester vorliegenden Fettsäuren beträgt mindestens 1 Mol, bezogen auf das Kohlenhydrat, vorzugsweise 0,5 bis 2 Mol pro Anhydroglycoseeinheit, und wird nach oben begrenzt durch die Gesamtzahl der in Aglykon und Anhydroglycoseeinheiten, d. h. im gesamten Kohlenhydrat zur Verfügung stehenden OH-Gruppen.

Die Sulfatierungsreaktion des Kohlenhydratesters wird so geführt, daß sich Sulfatierungsgrade von 10 bis 95 %, vorzugsweise 20 bis 90 %, ergeben. Das Ausmaß der Sulfatierung kann gesteuert werden durch die Wahl der Reaktionstemperatur, der Reaktionsdauer und dem Molverhältnis von z. B. Chlorsulfonsäure zu Kohlenhydratester.

Der erreichte Sulfatierungsgrad kann nach einer in K. Lindner, Tenside - Textilhilfsmittel - Waschrohstoffe, Band III, 3058, Wissenschaftliche Verlagsgesellschaft mbH, (1971), beschriebenen Analysemethode bestimmt werden.

Die Polymerisation des Vinylchlorids in wäßriger Suspension wird vorgenommen in Gegenwart von z.B. 0,001 bis 3 Gewichtsprozent, vorzugsweise 0,01 bis 0,3 Gewichtsprozent, bezogen auf Monomere, radikal-bildender Katalysatoren, wie z. B. Diaryl-; Diacylperoxide, wie Diacetyl-, Acetylbenzol-, Dilauroyl-, Dibenzoyl-, Bis-2,4-dichlorbenzoyl-, Bis-2-methylbenzoyl-peroxid; Dialkylperoxide, wie Di-tert.-butylperoxid; Perester, wie tert.-Butylpercarbonat, tert.-Butylperacetat, tert.-Butyloctoat, tert.-Butylperpivalat; Dialkylperoxidicarbonate, wie Diisopropyl-, Diethylhexyl-, Dicyclohexyl-, Diethylcyclohexylperoxidicarbonate; gemischte Anhydride von organischen Sulfopersäuren und organischen Säuren, wie Acetylcyclohexylsulfonylperoxid; als Polymerisationskatalysatoren bekannte Azoverbindungen, wie Azoisobuttersäurenitril, außerdem gegebenenfalls Zusätzen von Persulfaten, wie Kalium-, Natrium- oder Ammonium-persulfat, Wasserstoffperoxid, tert.-Butylhydroperoxid oder anderen wasserlöslichen Peroxiden sowie Mischungen verschiedener Katalysatoren, wobei peroxidische Katalysatoren auch in Gegenwart von 0,012 bis 1 Gewichtsprozent, bezogen auf Monomere, einer oder mehrerer reduzierender Substanzen, die zum Aufbau eines Redox-Katalysatorsystems geeignet sind, wie z. B. Sulfite, Bisulfite, Dithionite, Thiosulfate, Aldehydsulfoxilate, z. B. Na-Formaldehydsulfoxilat, eingesetzt werden können.

Die Polymerisation wird bei 40 bis 80 °C, vorzugsweise 50 bis 70 °C, bis zu einem Monomerumsatz des Vinylchlorids von 60 bis 95 %, vorzugsweise 70 bis 85 %, geführt. Aus wirtschaftlichen Gesichtspunkten wird ein möglichst hoher Endumsatz gewählt, wobei mit dem erfindungsgemäßen Suspensionsmittelsystem Vinylchloridpolymere erhalten werden, deren Kornporosität (bestimmt über die Weichmacheraufnahme bei Raumtemperatur nach DIN 53 417/1) auch dann noch sehr hoch ist, und zwar mehr als 25 %.

Nach der Polymerisation kann gegebenenfalls ein nichtionisches oder amphoteres Netzmittel zugesetzt werden, bevor die Hauptmenge der wäßrigen Phase abgetrennt und das Produkt einer Trocknungseinrichtung zugeführt wird.

Es werden folgende Kennzahlen am Vinylchloridpolymeren bestimmt:

Schüttdichte : nach DIN 53 468
Weichmacheraufnahme : nach DIN 53 417/1 (Zentrifugierverfahren)
Korngrößenverteilung: nach DIN 53 734 (Luftstrahlsiebung)

Gegenstand der Erfindung ist ferner die Verwendung der nach dem neuen Verfahren erzeugten sinterfähigen feinteiligen Formmassen zur Herstellung gesinterter Formkörper, wie Isoliermaterial, Füllkörper für Kühltürme, Filter, Wasserverdampfer an Heizungskörpern oder auch für Ionenaustauscher, insbesondere aber zur Herstellung von Separatorplatten für elektrische Zellen.

Aus den erfindungsgemäß hergestellten Formmassen lassen sich Separatorplatten durch Sinterung herstellen, die einen sehr niedrigen elektrischen Widerstand, eine hohe Plattenporosität und eine gute Zugfestigkeit aufweisen.

Die Herstellung der Sinterplatten erfolgt in üblicher Weise durch Auftragen einer bestimmten Schichtdicke des Polyvinylchlorid-Pulvers auf ein Stahlband, welches dann zur Sinterung in einen Umluftofen (230 °C) eingefahren wird. Die Verweilzeit und damit die Stärke der Sinterung wird so ausgewählt, daß mit Produkten nach dem Stand der Technik Separatorplatten erhalten werden, deren Eigenschaften den aus Vergleichsbeispiel 1 entsprechen.

Der Durchgangswiderstand der Separatoren wird analog zu dem in der DE-A-23 10 431 beschriebenen Verfahren mit einem Mikro-Ohmmeter bestimmt. Die Zugfestigkeit wird in Anlehnung an die DIN-Vorschrift 53 455 bestimmt.

Die folgenden Beispiele erläutern die Erfindung.

<u>Herstellung des sulfatierten Kohlenhydratesters</u>

Zu einer Lösung von 1,5 Mol Kohlenhydratester in 1,5 Liter Methylenchlorid tropft man im Verlauf von 1 Stunde bei 0 °C unter Durchleiten eines Stickstoffstroms (0,5 l/min) insgesamt 1,5 Mol Chlorsulfonsäure, gelöst in 200 ml Methylenchlorid, zu. Man rührt 4 Stunden bei 0 °C nach und setzt 1 Liter Eiswasser zu. Die wäßrige Phase wird mit Na tronlauge neutralisiert und mit 30 ml 30prozentigem Wasserstoffperoxid gebleicht. Das sulfatierte Produkt hat einen Sulfatierungsgrad von 75 % und wird als anfallende wäßrige Lösung weiterverarbeitet.

Die folgenden Mengenangaben bezeichnen Gewichtsteile (GT).

<u>Vergleichsbeispiel 1</u> (analog DE-C3-23 10 431)

In einem 40-l-Polymerisationsautoklav wird folgendes Gemisch bei 59 °C und 340 UpM bis zu einem Restdruck von 6 bar polymerisiert:

1 000 GT Vinylchlorid
2 000 GT entionisiertes Wasser
4 GT Methylcellulose (Viskosität 400 mPa s, 2 Gewichtsprozent Lösung bei 20 °C)
1 GT n-Dodecylbenzolsulfonsäure
0,4 GT Polyoxiethylen-Sorbitanmonolaurat
1 GT Dicetylperoxidicarbonat

Der feinkörnige Polymerisationsschlamm wird abfiltriert und das Polymerisat im Vakuumschrank getrocknet.

Das Pulver mit einer geringen Kornporosität ergibt Sinterplatten mit einem hohen elektrischen Durchgangswiderstand (Tabelle 1).

<u>Beispiel 1</u>

In einem 40-l-Polymerisationsautoklav wird folgendes Gemisch bei 54 °C und 340 UpM bis zu einem Restdruck von 5 bar polymerisiert:

1 000 GT Vinylchlorid
2 000 GT entionisiertes Wasser
5 GT Methyl-Hydroxypropylcellulose (METHOCEL® F 50 von DOW Chem. Co., Midland, USA)
2 GT Kohlenhydratestersulfat mit einem Sulfatierungsgrad von 80 % auf Basis von Rübölfettsäure-polyglycosylsorbitolester mit n = 12 und einem molaren Verhältnis von Anhydroglycose zu Carbonsäure von 1 : 1
GT Dicetylperoxidicarbonat

Nach der Entgasung des Restmonomeren rührt man 1 GT eines nichtionischen Netzmittels ein, und zwar eines Additionsproduktes aus 3 Mol Propylenoxid und 1 Mol Ethylenoxid, filtriert den feinkörnigen

Polymerisationsschlamm ab und trocknet das Polymere im Vakuumschrank.

Das Pulver hat eine hohe Kornporosität und ergibt bei der Verarbeitung Sinterplatten mit einem sehr niedrigen elektrischen Durchgangswiderstand und einer guten Zugfestigkeit (Tabelle 1).

Beispiel 2

In einem 40-l-Polymerisationsautoklav wird folgendes Gemisch bei 54 °C und 340 UpM bis zu einem Restdruck von 6 bar polymerisiert:

1 000 GT Vinylchlorid
2 000 GT entionisiertes Wasser
4 GT Methyl-Hydroxypropylcellulose (METHOCEL® F 50 von DOW Chem. Co., Midland, USA) mit dem molekularen Substitutionsgrad 2,0 und der Viskosität von 50 mPa s, gemessen in Wasser bei 20 °C als 2gewichtsprozentige Lösung
3 GT Kohlenhydratestersulfat mit einem Sulfatierungsgrad von 57 % auf Basis von Rübölfettsäure-polyglycosylsorbitolester mit n = 12 und einem molaren Verhältnis von Anhydroglycose zu Carbonsäure von 2 : 1
1 GT Dicetylperoxidicarbonat

Nach der Entgasung des Restmonomeren rührt man 1 GT eines nichtionischen Netzmittels ein, und zwar eines Additionsproduktes aus 3 Mol Propylenoxid und 1 Mol Ethylenoxid, filtriert den feinkörnigen Polymerisationsschlamm ab und trocknet das Polymere im Vakuumschrank.

Das Pulver ergibt bei der Verarbeitung Sinterplatten mit einem sehr niedrigen elektrischen Durchgangswiderstand und einer guten Zugfestigkeit (Tabelle 1).

Vergleichsbeispiel 2

Es wird wie im Beispiel 1 vorgegangen, jedoch setzt man als Kohlenhydratestersulfat 3 GT eines Typs mit einem Sulfatierungsgrad von 7 % ein.

Das Pulver kann unter den gewählten Bedingungen nicht zu Platten versintert werden. Mit veränderten Sinterbedingungen erhält man ausschließlich unporöse, thermisch stark geschädigte Sinterplatten, die sich für eine Verwendung als Batterieseparatorenplatten nicht eignen.

Tabelle 1

| | PVC-Pulverdaten | | | Daten des Sinterseparators | |
|---|---|---|---|---|---|
| | Schüttdichte (g/l) | Weichmacheraufnahme (Gew.-%) | mittlere Korngröße $\bar{K}$ (µm) | elektrischer Durchgangswiderstand (mOhm/dm²) | Zugfestigkeit (N/mm²) |
| Vergleichsbeispiel 1 | 415 | 15 | 27 | 1,6 | 9,8 |
| Vergleichsbeispiel 2 | 462 | 22,5 | 35 | 1) | 1) |
| Beispiel 1 | 405 | 30 | 34 | 0,8 | 10,3 |
| Beispiel 2 | 437 | 27 | 40 | 0,9 | 7,5 |

1) Pulver nicht sinterbar

## Patentansprüche

1. Verfahren zur Herstellung einer sinterfähigen feinteiligen Formmasse auf Basis von Polyvinylchlorid durch Suspensionspolymerisation von Vinylchlorid bei 40 bis 80 °C in Gegenwart von mindestens einem öllöslichen, radikalisch zerfallenden Aktivator, gegebenenfalls Molekülgrößenreglern, sowie Celluloseethern als Suspensionsstabilisatoren,

dadurch gekennzeichnet,
daß man 0,5 bis 1 Gewichtsprozent, bezogen auf das Monomere, eines Suspendiermittelgemisches verwendet, welches besteht aus

a) 10 bis 90 Gewichtsprozent, bezogen auf das Gemisch, eines Kohlenhydratesters, bestehend aus einem Kohlenhydrat folgender Formel:

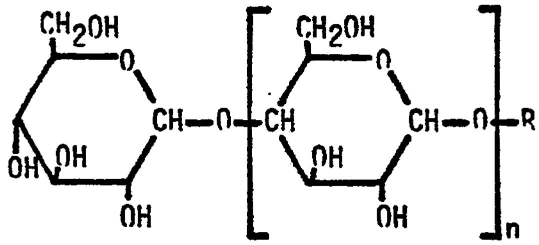

in der n eine Zahl von 0 bis 99 und R den Rest eines 2- bis 6wertigen aliphatischen linearen oder verzweigten Alkohols mit 2 bis 12 Kohlenstoffatomen bedeutet, und einer gesättigten oder ungesättigten, linearen oder verzweigten Carbonsäure mit 6 bis 24 Kohlenstoffatomen, welcher Kohlenhydratester zu 10 bis 95 % sulfatiert ist, sowie aus

b) 90 bis 10 Gewichtsprozent Methylcellulose, Methylhydroxyethylcellulose, Methylhydroxypropylcellulose, Hydroxyethylcellulose oder Hydroxypropylcellulose, wobei die 2gewichtsprozentige wäßrige Lösung der genannten Celluloseether bei 20 °C eine Viskosität von 15 bis 500 • $10^{-3}$Pa s ausweist.

2.Verfahren nach Anspruch 1,
dadurch gekennzeichnet,
daß die beiden Bestandteile des Supendiermittelgemisches a) und b) im Gewichtsverhältnis 20 : 80 bis 80 : 20 eingesetzt werden.

3.Verfahren nach Anspruch 1 oder 2,
dadurch gekennzeichnet,
daß die Komponente b) eine Methylhydroxypropylcellulose mit einer Viskosität von 50 bis 100 mPa s ist und 30 bis 70 Gewichtsprozent des gesamten Suspendiermittelgemisches ausmacht.

4.Verfahren nach einem der Ansprüche 1 bis 3,
dadurch gekennzeichnet,
daß der Sulfatierungsgrad des Kohlenhydratesters 20 bis 90 % beträgt.

5.Verfahren nach einem der Ansprüche 1 bis 4,
dadurch gekennzeichnet,
daß der Veresterungsgrad des Kohlenhydratesters 10 bis 95 beträgt.

6. Verwendung der nach einem der Ansprüche 1 bis 5 hergestellten Formmassen zur Herstellung von gesinterten Formkörpern, insbesondere von Separatorplatten für elektrische Zellen.

**Claims**

1. A process for the preparation of a sinterable, finely divided moulding composition based on polyvinyl chloride by suspension polymerisation of vinyl chloride at 40 to 80°C in the presence of at least one oil-soluble activator which decomposes to give free radicals, if appropriate a molecular weight regulator, and a cellulose ether as suspension stabiliser, characterised in that 0.5 to 1 per cent by weight, based on the monomer, of a suspending agent mixture is used which is composed of

a) 10 to 90 per cent by weight based on the mixture, of a carbohydrate ester composed of a carbohydrate of the formula below:

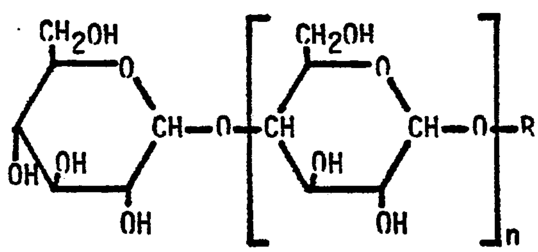

in which n denotes an integer from 0 to 99 and R denotes the radical of a divalent to hexavalent aliphatic linear or branched alcohol having 2 to 12 carbon atoms, and a saturated or unsaturated, linear or branched carboxylic acid having 6 to 24 carbon atoms, which carbohydrate ester is sulphated to the extent of 10 to 95%, and of

b) 90 to 10 per cent by weight of methylcellulose, methylhydroxyethylcellulose, methylhydroxypropylcellulose, hydroxyethylcellulose or hydroxypropylcellulose, the 2 per cent strength by weight aqueous

solution of the cellulose ethers mentioned having a viscosity of from 15 to 500 x 10−3Pa s at 20°C.

2. A process according to claim 1, characterized in that the two components of the suspending agent mixture a) and b) are employed in the weight ratio 20:80 to 80:20.

3. A process according to either claim 1 or 2, characterized in that component b) is a methylhydroxypropyl cellulose having a viscosity of from 50 to 100 mPas and makes up 30 to 70 per cent by weight of the total suspending agent mixture.

4. A process according to any of claims 1 to 3, characterized in that the degree of sulphation of the carbohydrate ester is 20 to 90%.

5. A process according to any of claims 1 to 4, characterized in that the degree of esterification of the carbohydrate ester is 10 to 95%.

6. The use of a moulding composition prepared in accordance with any one of claims 1 to 5 for the preparation of sintered moulded articles, in particular separator plates for electrical cells.

**Revendications**

1. Procédé pour fabriquer une masse de moulage en fines particules, se prêtant au frittage, à base de chlorure de polyvinyle, par polymérisation en suspension de chlorure de vinyle à une température de 40 à 80°C en présence d'au moins un activateur oléo-soluble décomposant en radicaux, le cas échéant de régulateurs de la taille moléculaire, ainsi que d'éthers de cellulose comme stabilisants de la suspension, caractérisé par le fait que l'on utilise de 0,5 à 1% en poids, calculé par rapport au monomère, d'un mélange d'agents de suspension qui se compose

a) de 10 à 90% en poids, calculé par rapport au mélange, d'un ester d'hydrate de carbone se composant d'un hydrate de carbone répondant à la formule suivante :

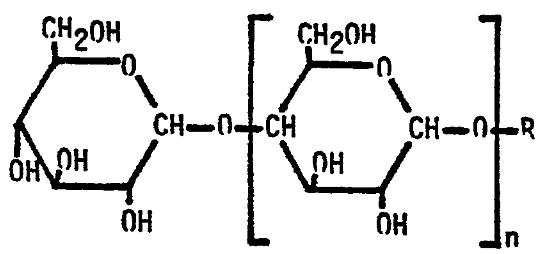

dans laquelle n est un nombre de zéro à 99 et R le reste d'un alcool aliphatique de 2 à 12 atomes de carbone, linéaire ou ramifié, présentant de 2 à 6 fonctions alcool et d'un acide carboxylique saturé ou nonsaturé, linéaire ou ramifié, comportant de 6 à 24 atomes de carbone, l'ester d'hydrate de carbone étant sulfate à concurrence de 10 à 95%, ainsi que :

b) de 90 à 10% en poids de méthyl-cellulose, de méthyl-hydroxy-éthyl-cellulose, de méthylhydroxy-propylcellulose, d'hydroxy-éthyl-cellulose ou d'hydroxy-propyl-cellulose, la solution aqueuse à 2% en poids des éthers de cellulose cités présentant, à 20°C, une viscosité de 15 à 500 . 10−3pa.s.

2.Procédé suivant la revendication 1, caractérisé par le fait que les deux constituants a) et b) du mélange d'agents de suspension sont mis en œuvre dans des proportions de 20:80 à 80:20 parties en poids.

3. Procédé suivant la revendication 1 ou 2, caractérisé par le fait que le constituant b) est une méthyl-hydroxy-propyl-cellulose d'une viscosité de 50 à 100 mPa.s et représente de 30 à 70% en poids de l'ensemble du mélange d'agents de suspension.

4. Procédé suivant l'une des revendications 1 à 3, caractérisé par le fait que le degré de sulfation de l'ester d'hydrate de carbone est de 20 à 90%.

5. Procédé suivant l'une des revendications 1 à 4, caractérisé par le fait que le degré d'estérification de l'ester d'hydrate de carbone est de 10 à 95%.

6. L'utilisation de la masse de moulage élaborée suivant l'une des revendications 1 à 5, pour fabriquer des corps moulés frittés, en particulier des plaques de séparateur pour cellules électriques.